# EUROPÄISCHE PATENTSCHRIFT

(11) **EP 1 982 246 B1**
(45) Veröffentlichungstag und Bekanntmachung des Hinweises auf die Patenterteilung: **02.03.2011**
(21) Anmeldenummer: 06830313.0
(22) Anmeldetag: 04.12.2006
(51) Int. Cl.: G05B 19/418

(54) **VERFAHREN ZUM ABLEGEN VON STÜCKGÜTERN IN BEHÄLTER**
METHOD FOR DEPOSITING PIECE GOODS INTO CONTAINERS
PROCÉDÉ POUR DÉPOSER DES MARCHANDISES AU DÉTAIL DANS DES RÉCIPIENTS

(30) Priorität: 27.01.2006 DE 102006003859
(43) Veröffentlichungstag der Anmeldung: 22.10.2008
(73) Patentinhaber: ROBERT BOSCH GMBH, 70442 Stuttgart (DE)
(72) Erfinder: STIFTER, Christian, CH-8247 Flurlingen (CH)
(86) Internationale Anmeldenummer: PCT/EP2006/069247
(87) Internationale Veröffentlichungsnummer: WO 2007/085318

(56) Entgegenhaltungen:
- EP-A1- 0 590 154
- US-A- 4 641 271
- US-A- 6 055 462
- LIMA P U ET AL: "LARNING OPTIMAL ROBOTIC TASKS" IEEE EXPERT, IEEE SERVICE CENTER, NEW YORK, NY, US, Bd. 11, Nr. 2, 1. April 1996 (1996-04-01), Seiten 38-45, XP000585060 ISSN: 0885-9000

## Beschreibung

### Stand der Technik

Die Erfindung betrifft ein Verfahren zum Ablegen von Stückgütern in Behälter gemäss Oberbegriff des Anspruchs 1 sowie eine Steuerung zur Durchführung des Verfahrens gemäss Oberbegriff des Anspruchs 11.

Es ist bekannt, Roboterlinien zu verwenden, um Stückgüter in Behälter abzulegen. Dabei werden die Stückgüter und die Behälter in Arbeitsbereiche einzelner Roboter gefördert und die Stückgüter werden vom Roboter gemäss einer Steuerung in vordefinierte Leerstellen des Behälters abgelegt. Derartige Pickerlinien sind beispielsweise in WO 2004/113030, US 6'122'895, US 5'040'056, DE 37'04'423 und CH 693 710 beschrieben. WO 2004/018332 beschreibt, wie Produkte automatisch erkannt und selektiert werden können.
WO 03/103903 und US 4'503'507 offenbaren eine gemeinsame Steuerung für mehrere Roboter.

Damit der Roboter jeweils weiss, welche Stückgüter er in welche Leerstelle ablegen muss, sind aufwendige Lernprozesse notwendig. Diese Lernprozesse müssen üblicherweise von speziell auf die Anlage geschultem Personal durchgeführt werden. Soll die Verpackungsart geändert werden, so muss die Anlage stillgelegt und neu programmiert werden.

Aus der US 4,641,271 ist eine Lagerplanungsmethode für Lasten bekannt, bei der ein Bediener eine beliebige Stapelposition für jede der verschiedenen Lasten bestimmen kann, indem das Stapelresultat grafisch an einem Bildschirm angezeigt wird. Über bestimmte Parameter kann der ungenutzte Raum reduziert werden.

### Vorteile der Erfindung

Es ist deshalb eine Aufgabe der Erfindung, ein Verfahren und eine Steuerung zu schaffen, welche eine einfache Neu-Konfiguration des Verpackungsvorgangs erlauben.

Diese Aufgabe löst ein Verfahren und eine Steuerung mit den Merkmalen des Patentanspruchs 1 bzw. 11.

Im erfindungsgemässen Verfahren werden reale Stückgüter entlang einer Pickerstrasse transportiert und mittels Roboter in gemäss einer Steuerung vorbestimmte Plätze der realen Behälter abgelegt, wobei vorgängig eine Zuordnung der realen Stückgüter und der realen Behälter zueinander erfolgt, indem auf einem mit der Steuerung verbundenen Bildschirm graphisch dargestellte Symbole für Stückgüter in mindestens ein graphisch dargestelltes Symbol für einen Behälter gelegt werden.

Dadurch kann der Anwender der Verpackungsstrasse ohne grossen Programmieraufwand die gewünschte Verpackung wählen. Notwendig ist lediglich, dass die Steuerung der Roboter eine Liste oder Bibliothek von Symbolen für Stückgüter und Behälter zur Verfügung stellt, welche den realen Stückgütern und Behältern entsprechen, so dass die Roboter die realen Stückgüter in die realen Behälter ablegen, wie es aufgrund der am Bildschirm bzw. an der graphischen Anwenderschnittstelle (User Interface) zusammengestellten gefüllten Verpackung vordefiniert worden ist.

In einer bevorzugten Ausführungsform werden die Symbole auf dem Bildschirm über eine Drag-and Drop Bewegung verschoben. Andere Möglichkeiten, beispielsweise über Tastaturbefehle, sind jedoch auch möglich.

Das erfindungsgemässe Verfahren und die erfindungsgemässe Steuerung zeichnen sich durch eine hohe Flexibilität aus. Verschiedene Kombinationen von Behältern und Stückgütern lassen sich auf einfache Weise sehr schnell zusammenstellen, wobei dies auch durch Bedienpersonal mit einer relativ tiefen Kenntnis der Anlage durchgeführt werden kann.

Weitere vorteilhafte Varianten und Ausführungsformen gehen aus den abhängigen Patentansprüchen hervor.

### Zeichnung

Ein Ausführungsbeispiel der Erfindung ist in der Zeichnung dargestellt und wird nachfolgend näher erläutert. Es zeigen:
- Figur 1: eine perspektivische Darstellung einer Pickerstrasse bekannter Art;
- Figur 2: ein Beispiel einer Bildschirmdarstellung gemäss der Erfindung;
- Figuren 3a bis 3d: weitere Darstellungen von Bildschirmdarstellungen gemäss der Erfindung und
- Figur 4: ein Flussdiagramm zur Darstellung des erfindungsgemässen Verfahrens.

### Beschreibung des Ausführungsbeispiels

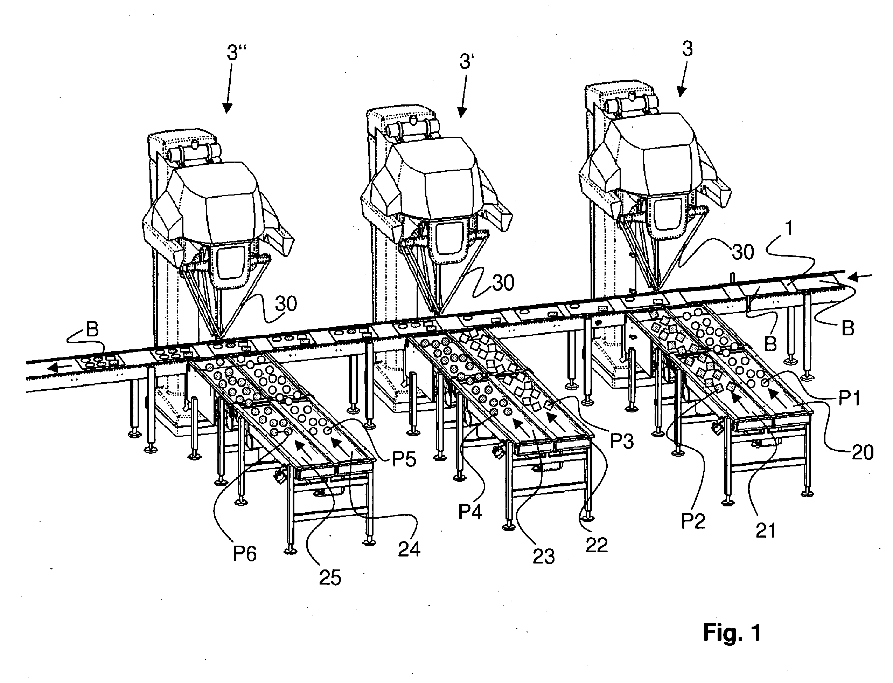

In Figur 1 ist eine Pickerstrasse bekannter Art dargestellt. Ein Behälterförderer 1 erstreckt sich in einer Längsrichtung und transportiert reale Behälter B an mehreren Robotern 3, 3', 3" vorbei. Die Transportrichtung ist mit zwei Pfeilen gekennzeichnet.

Senkrecht zum Behälterförderer 1 werden reale Stückgüter P1 bis P6 auf Produkteförderern 20-25 zugeführt. Dabei sind pro Roboter 3, 3', 3" zwei parallel zueinander verlaufende Produkteförderer 20-25 vorhanden, welche je eine Stückgutsorte P1 bis P6 in den Arbeitsbereich eines Roboters 3, 3', 3" transportieren.

Die hier dargestellten Behälter- und Produkteförderer 1, 20-25 sind endlos umlaufende Förderbänder. Es eignen sich jedoch auch andere Transportsysteme. Des weiteren kann auch eine andere Anzahl von Behälter- und Produkteförderern verwendet werden. Sie müssen auch nicht senkrecht zueinander angordnet sein, sondern können beispielsweise auch im Gleich- oder Gegenstrom parallel zueinander verlaufen.

Ferner kann jeder Produkteförderer eine eigene Produktesorte zuliefern. Es ist jedoch auch möglich, dass mehrere Produkteförderer dieselbe Stückgutsorte transportieren bzw. dass auf einem Förderer gleichzeitig unterschiedliche Stückgutsorten angeordnet sind. Des weiteren können die Stückgüter und die Behälter in geordneter und ungeordneter Formation an die Roboter geliefert werden. Insbesondere im Falle eines ungeordneten Transports verfügt die Pickerstrasse über eine oder mehrere Erkennungseinheiten bekannter Art, um die Lage und/oder Typ der Stückgüter bzw. der Behälter zu erkennen.

Die hier dargestellten Roboter 3, 3', 3" sind Deltaroboter bekannter Art, welche mit Pickerarmen 30 versehen sind. Derartige Deltaroboter sind beispielsweise in US 4'976'582 beschrieben. Es lassen sich jedoch auch andere Roboter verwenden. Die Roboter sind über eine gemeinsame Steuerung miteinander verbunden.

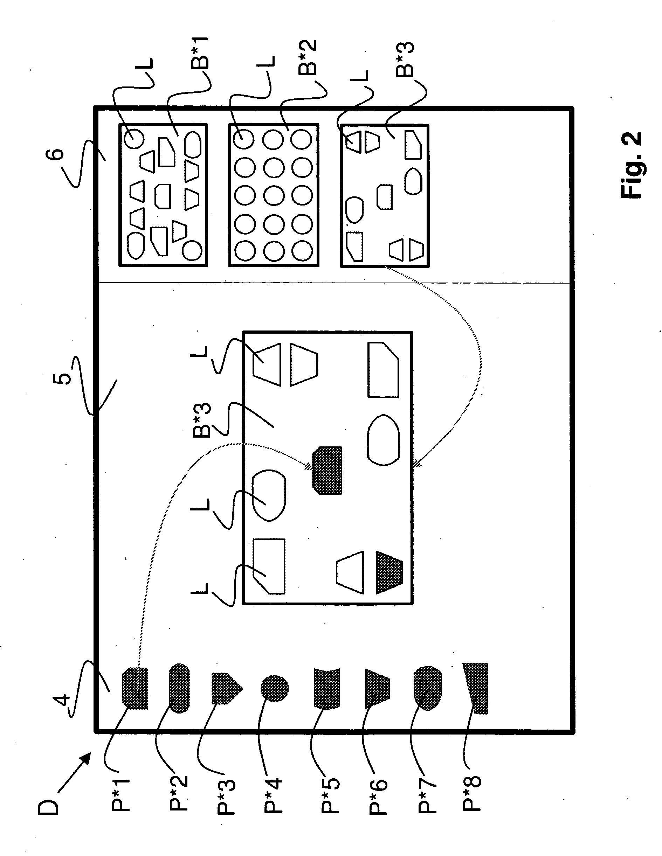

Erfindungsgemäss legen die Roboter nun die einzelnen Stückgüter gemäss einem Muster in die Behälter ab, welches vorgängig an einer graphischen Anwenderschnittstelle D ausgewählt worden ist: Figur 2 zeigt diese Auswahl oder Konfiguration des Verpackungsvorgangs. Diese Konfiguration kann bei stillstehender Anlage erfolgen. Sie lässt sich jedoch auch während des Betriebs der Anlage durchführen.

In Figur 2 ist ein Bildschirm dargestellt, welcher in drei Bereiche unterteilt ist. Der linke Randbereich 4 enthält ein Sortiment bzw. eine Liste von Symbolen P*1 bis P*8 für Stückgüter, welche jeweils realen Stückgütern entsprechen. Jedes Symbol entspricht dabei einer Stückgutsorte. Hier sind somit acht verschiedene Sorten dargestellt. Der rechte Randbereich 6 enthält eine Liste von Symbolen B*1 bis B*3 für unterschiedliche Behälter, hier drei an der Zahl. Auch diese Symbole entsprechen jeweils realen Behältern. Die Symbole der entsprechenden Plätze oder Leerstellen der Behältersymbole sind mit L bezeichnet.

Diese Symbole der Stückgüter und Behälter entstammen Bibliotheken des Computerprogramms der Robotersteuerung. Die Bibliotheken werden üblicherweise kundenspezifisch bei der Installation der Anlage gefüllt. Sie lassen sich jederzeit auch mit neuen Produkten und Behältern ergänzen, aktualisieren oder ändern, sofern die Steuerung diese neuen Behälter und Produkte erkennen und die Roboterbewegungen entsprechend anpassen kann. Auf dem Bildschirm kann die gesamte Bibliothek dargestellt sein oder eine kundenspezifische Auswahl der Symbole.

Der mittlere Bereich 5 bildet die Arbeitsfläche. In diese Fläche lässt sich ein Behältersymbol aus der Behälterliste ziehen und die Leerstellen L lassen sich dort mit Symbolen aus der Stückgutliste füllen. Die nicht ausgefüllten Flächen im Behälter sind noch nicht gefüllt, die ausgefüllten Flächen sind bereits symbolisch mit Stückgütern gefüllt.

Vorzugsweise werden die Symbole mittels manuellen Drag-and Drop Bewegungen verschoben, insbesondere indem eine Computermaus oder ein Computerpad benützt wird. Es ist jedoch auch möglich, die Symbole auf andere bekannte Art zu verschieben, beispielsweise mittels Tastaturbefehlen.

Im realen Verpackungsverfahren werden nun in jeden realen Behälter reale Stückgüter verschiedener Stückgutsorten nach vorgegebenem Muster abgelegt, so dass gemischte reale Packungen entstehen, wobei dieses Muster der Steuerung vorgegeben wird, indem auf dem Bildschirm die graphisch dargestellten Symbole für Stückgüter in mindestens ein graphisch dargestelltes Symbol für den Behälter gelegt werden, bis auf dem Bildschirm ein Abbild der gewünschten gemischten realen Packung dargestellt ist.

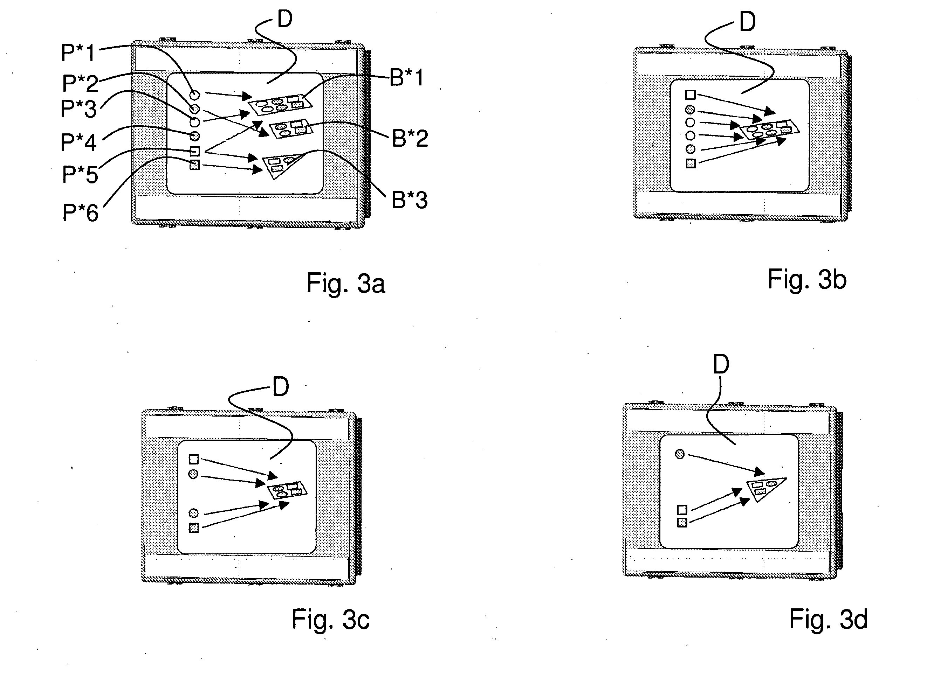

In den Figuren 3a bis 3d sind weitere Beispiele von Bildschirmdarstellungen gezeigt. Im Gegensatz zu Figur 2, wo alle Stückgüter und Behälter auf dem Bildschirm sichtbar sind, wird hier nun mit mehreren Ebenen gearbeitet. Die gewünschten Stückgüter und Behälter wurden bereits auf einer anderen Ebene ausgewählt oder mittels eines Pulldown Menüs angeklickt. Die ausgewählten Stückgüter liegen nun zur freien Verfügung auf dem Bildschirm und können in gewünschter Anordnung in den Behälter abgelegt werden.

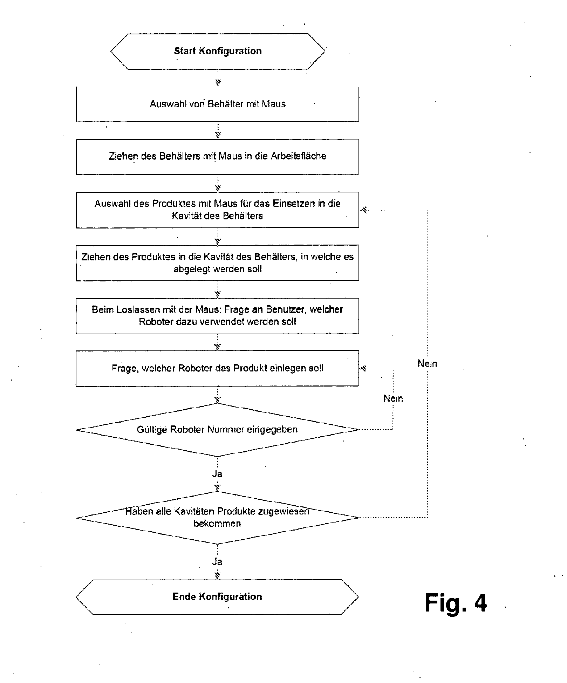

In Figur 4 ist das erfindungsgemässe Verfahren anhand eines Flussdiagramms dargestellt. Die Konfiguration startet mit der Auswahl eines Behältersymbols, vorzugsweise mit einer Mausbewegung, wobei das Behältersymbol in die Arbeitsfläche des.Bildschirms gezogen wird. Dann werden mit der Computermaus oder einem anderen geeigneten Werkzeug die Stückgütersymbole, hier Produkte genannt, ausgewählt. Sie werden einzeln oder in Gruppen in die Kavitäten oder Leerstellen des ausgewählten Behältersymbols gezogen und dort abgelegt. Vorzugsweise wird nun der Benützer gefragt, welcher Roboter in der Realität für diese Arbeit eingesetzt werden soll. Wird eine gültige Nummer eines Roboters eingegeben, d.h. eine realisierbare Lösung, so wird mit der Konfiguration weitergefahren. Wird ein ungeeigneter oder nicht existierender Roboter ausgewählt, so wird die Frage neu gestellt. Sobald alle Kavitäten ein Produktesymbol zugewiesen bekommen haben, wird die Konfiguration beendet und die Steuerung bzw. das dazugehörige Computerprogramm berechnet die Roboterbewegungen.

Es ist auch möglich, dass kein Roboter manuell ausgewählt werden muss, sondern dass das Computerprogramm bzw. die Steuerung selber den optimalsten Roboter auswählt. Auch ist es möglich, dass das Behältersymbol nicht vollständig befüllt werden muss, um die Konfiguration abzuschliessen.

Das erfindungsgemässe Verfahren ermöglicht somit eine einfache und schnelle Umsetzung einer gewünschten Füllung eines Behälters mit einem Stückgutsortiment in reale Roboterbewegungen.

### Bezugszeichenliste

- 1: Behälterförderer
- 20: erster Produkteförderer
- 21: zweiter Produkteförderer
- 22: dritter Produkteförderer
- 23: vierter Produkteförderer
- 24: fünfter Produkteförderer
- 25: sechster Produkteförderer
- 3, 3', 3": Deltaroboter
- 30: Pickerarm
- 4: Symbolliste der Stückgüter
- 5: Arbeitsfläche
- 6: Symbolliste der Behälter
- B: relater Behälter
- P1: erste reale Stückgutsorte
- P2: zweite reale Stückgutsorte
- P3: dritte reale Stückgutsorte
- P4: vierte reale Stückgutsorte
- P5: fünfte reale Stückgutsorte
- P6 6: sechste reale Stückgutsorte
- D: Graphische Anwendungsschnittstelle
- B*1: erstes Symbol für einen Behälter
- B*2: zweites Symbol für einen Behälter
- B*3: drittes Symbol für einen Behälter
- L: Symbol für eine Leerstelle
- P*1: erstes Symbol für eine Stückgutsorte
- P*2: zweites Symbol für eine Stückgutsorte
- P*3: drittes Symbol für eine Stückgutsorte
- P*4: viertes Symbol für eine Stückgutsorte
- P*5: fünftes Symbol für eine Stückgutsorte
- P*6: sechstes Symbol für eine Stückgutsorte
- P*7: siebtes Symbol für eine Stückgutsorte
- P*8: achtes Symbol für eine Stückgutsorte

## Patentansprüche

1. Verfahren zum Ablegen von realen Stückgütern in reale Behälter, wobei reale Stückgüter entlang einer Pickerstrasse (1) transportiert werden und mittels Roboter (3,3',3") in gemäss einer Steuerung vorbestimmte Plätze der realen Behälter abgelegt werden, wobei
vorgängig eine Zuordnung der realen Stückgüter und der realen Behälter zueinander erfolgt, indem auf einem mit der Steuerung verbundenen Bildschirm graphisch dargestellte Symbole (P*1, P*2,...) für Stückgüter in mindestens ein graphisch dargestelltes Symbol (L) für einen Behälter (B*1, B*2,...) gelegt werden, **dadurch gekennzeichnet, dass**
aus einem Sortiment von verschiedenen Symbolen für Stückgüter und/oder verschiedenen Behältern gewählt wird, welche jeweils unterschiedlichen realen Stückgütern bzw. realen Behältern entsprechen.

2. Verfahren nach Anspruch 1, wobei in jeden realen Behälter reale Stückgüter verschiedener Stückgutsorten nach vorgegebenem Muster abgelegt werden, so dass gemischte reale Packungen entstehen, und wobei dieses Muster der Steuerung vorgegeben wird, indem auf dem Bildschirm die graphisch dargestellten Symbole für Stückgüter in mindestens ein graphisch dargestelltes Symbol für den Behälter gelegt werden, bis auf dem Bildschirm ein Abbild der gewünschten gemischten realen Packung dargestellt ist.

3. Verfahren nach einem der Ansprüche 1 oder 2, wobei die Bewegung der Symbole auf dem Bildschirm manuell mittels einer "drag and drop" Bewegung erfolgt.

4. Verfahren nach einem der Ansprüche 1 bis 3, wobei die realen Stückgüter nach Stückgutsorten getrennt zugeführt werden.

5. Verfahren nach einem der Ansprüche 1 bis 4, wobei die realen Behälter vollständig befüllt werden.

6. Verfahren nach einem der Ansprüche 1 bis 5, wobei auf dem Bildschirm eine Auswahl an unterschiedlichen Symbolen für Stückgüter und eine Auswahl an unterschiedlichen Symbolen für Behälter dargestellt werden und dass diese Symbole einzeln oder in Gruppen ausgewählt und auf eine gemeinsame Arbeitsfläche des Bildschirms gebracht werden können, wo die Symbole für die Stückgüter in das oder die Symbole für Behälter abgelegt werden.

7. Verfahren nach Anspruch 6, wobei auf dem Bildschirm gleichzeitig die Symbole für die Stückgüter, die Symbole für die Behälter und die Arbeitsfläche dargestellt werden.

8. Verfahren nach einem der Ansprüche 1 bis 7, wobei als Roboter Deltaroboter verwendet werden.

9. Steuerung zur Durchführung des Verfahrens gemäss einem der Ansprüche 1 bis 8, wobei die Steuerung ein Computerprogramm umfasst, welches eine Bibliothek von ersten Symbolen für Stückgüter und eine Bibliothek von zweiten Symbolen für Behälter enthält und wobei es eine auf einem Bildschirm zusammengefügte Behälter/Produktekombination in Steuerungsbefehle zur Ansteuerung von Robotern umsetzt, welche dem mindestens einen ersten Symbol entsprechende reale Stückgüter in einen dem zweiten Symbol entsprechenden Behälter ablegen.

10. Computerprogramm zur Durchführung des Verfahrens gemäss einem der Ansprüche 1 bis 8, welches eine Bibliothek von ersten Symbolen für Stückgüter und eine Bibliothek von zweiten Symbolen für Behälter enthält und wobei es eine auf einem Bildschirm zusammengefügte Behälter/Produktekombination in Steuerungsbefehle zur Ansteuerung von Robotern umsetzt, welche einem mindestens einem ersten Symbol entsprechende reale Stückgüter in einen einem zweiten Symbol entsprechenden Behälter ablegen.

11. Graphische Anwenderschnittstelle zur Durchführung des Verfahrens nach einem der Ansprüche 1 bis 8, wobei auf einem Bildschirm eine Liste von unterschiedlichen ersten Symbolen für unterschiedliche Stückgüter und eine Liste von unterschiedlichen zweiten Symbolen für Behälter dargestellt sind, wobei ferner auf dem Bildschirm eine Arbeitsfläche vorhanden ist, um auf dieser Arbeitsfläche ausgewählte erste Symbole für Stückgüter in ausgewählte zweite Symbole für Behälter abzulegen.

## Claims

1. Method for depositing real piece goods into real containers, real piece goods being transported along a picking line (1) and being deposited into places of the real containers using robots (3, 3', 3"), which places are predetermined according to a controller, the real piece goods and the real containers being assigned to one another in advance by placing graphically displayed symbols (P*1, P*2, ...) for piece goods into at least one graphically displayed symbol (L) for a container (B*1, B*2, ...) on a screen which is connected to the controller, **characterized in that** a selection is made from a range of different symbols for piece goods and/or different containers which respectively correspond to the different real piece goods and/or real containers.

2. Method according to Claim 1, real piece goods of different types being deposited into each real container according to a predefined pattern, thus producing mixed real packages, and this pattern being predefined to the controller by placing the graphically displayed symbols for piece goods into at least one graphically displayed symbol for the container on the screen until an image of the desired mixed real package is displayed on the screen.

3. Method according to either of Claims 1 and 2, the symbols being manually moved on the screen using a "drag and drop" movement.

4. Method according to one of Claims 1 to 3, the real piece goods being supplied in a manner separated according to types of piece goods.

5. Method according to one of Claims 1 to 4, the real containers being completely filled.

6. Method according to one of Claims 1 to 5, a selection of different symbols for piece goods and a selection of different symbols for containers being displayed on the screen, and these symbols being able to be selected individually or in groups and being able to be placed onto a common work surface of the screen where the symbols for the piece goods are deposited into the symbol(s) for containers.

7. Method according to Claim 6, the symbols for the piece goods, the symbols for the containers and the work surface being simultaneously displayed on the screen.

8. Method according to one of Claims 1 to 7, delta robots being used as the robots.

9. Controller for carrying out the method according to one of Claims 1 to 8, the controller comprising a computer program which contains a library of first symbols for piece goods and a library of second symbols for containers and converts a container/product combination assembled on a screen into control commands for driving robots which deposit real piece goods corresponding to the at least one first symbol into a container corresponding to the second symbol.

10. Computer program for carrying out the method according to one of Claims 1 to 8, which contains a library of first symbols for piece goods and a library of second symbols for containers and converts a container/product combination assembled on a screen into control commands for driving robots which deposit real piece goods corresponding to at least one first symbol into a container corresponding to a second symbol.

11. Graphical user interface for carrying out the method according to one of Claims 1 to 8, a list of different first symbols for different piece goods and a list of different second symbols for containers being displayed on a screen, a work surface also being provided on the screen in order to deposit selected first symbols for piece goods into selected second symbols for containers on this work surface.

## Revendications

1. Procédé de dépôt de marchandises au détail réelles dans des récipients réels, les marchandises au détail réelles étant transportées sur un parcours (1) de saisie et déposées au moyen de robots (3, 3', 3") dans des emplacements prédéterminés par une commande des récipients réels, une attribution des marchandises au détail réelles aux récipients réels ayant eu lieu précédemment en plaçant sur un écran relié à la commande des représentations graphiques de symboles (P*1, P*2, ...) des marchandises au détail dans au moins une représentation graphique d'un symbole d'un récipient (B*1, B*2, ...), **caractérisé en ce que** le procédé sélectionne dans un assortiment de différents symboles des marchandises au détail et/ou des différent récipients, ceux qui correspondent aux différentes marchandises au détail réelles et aux récipients réels.

2. Procédé selon la revendication 1, dans lequel des marchandises au détail réelles de différents types de marchandises au détail sont déposées dans chaque récipient réel en fonction d'un motif prédéterminé de telle sorte que l'on obtient des emballages réels de mélanges, ce motif étant prédéterminé par la commande en plaçant sur l'écran les représentations graphiques de symboles des marchandises au détail dans au moins une représentation graphique d'un symbole du récipient jusqu'à ce qu'une image de l'emballage réel du mélange souhaité soit représentée sur l'écran.

3. Procédé selon l'une des revendications 1 ou 2, dans lequel le déplacement des symboles sur l'écran s'effectue manuellement au moyen d'un déplacement "tirer-lâcher".

4. Procédé selon l'une des revendications 1 à 3, dans lequel les marchandises au détail réelles sont apportées séparément en fonction des types de marchandises au détail.

5. Procédé selon l'une des revendications 1 à 4, dans lequel les récipients réels sont complètement remplis.

6. Procédé selon l'une des revendications 1 à 5, dans lequel une sélection de différents symboles des marchandises au détail et une sélection de différents symboles des récipients sont présentées sur l'écran et dans lequel ces symboles sont sélectionnés un à un ou en groupes et peuvent être amenés sur une surface de travail commune de l'écran dans laquelle les symboles des marchandises au détail sont déposés dans le ou les symboles des récipients.

7. Procédé selon la revendication 6, dans lequel les symboles des marchandises au détail, les symboles des récipients et la surface de travail sont représentés simultanément sur l'écran.

8. Procédé selon l'une des revendications 1 à 7, dans lequel les robots utilisés sont des robots dits delta.

9. Commande en vue de l'exécution du procédé selon l'une des revendications 1 à 8, la commande comprenant un programme informatique qui contient une bibliothèque de premiers symboles des marchandises au détail et une bibliothèque de deuxièmes symboles des récipients, une combinaison de récipients et de produits assemblés sur un écran étant convertie en ordres de commande qui donnent pour instruction aux robots de déposer des marchandises au détail réelles qui correspondent au premier ou aux premiers symboles dans un récipient qui correspond au deuxième symbole.

10. Produit de programme informatique en vue de l'exécution d'un procédé selon l'une des revendications 1 à 8, qui comprend une bibliothèque de premiers symboles des marchandises au détail et une bibliothèque de deuxièmes symboles des récipients, une combinaison de récipients et de produits assemblés sur un écran étant convertie en ordres de commande qui donnent pour instruction aux robots de déposer des marchandises au détail réelles qui correspondent au premier ou aux premiers symboles dans un récipient qui correspond au deuxième symbole.

11. Interface graphique d'utilisateur destinée à l'exécution du procédé selon l'une des revendications 1 à 8, dans laquelle une liste de différents premiers symboles des différentes marchandises au détail et une liste de différents deuxièmes symboles des récipients sont représentées sur un écran, l'écran présentant en outre une surface de travail pour que l'on puisse déposer sur cette surface de travail des premiers symboles sélectionnés de marchandises au détail dans des deuxièmes symboles sélectionnés de récipients.
